# EUROPÄISCHE PATENTANMELDUNG

(11) **EP 4 328 122 A1**
(43) Veröffentlichungstag der Anmeldung: **28.02.2024**
(21) Anmeldenummer: 23186689.8
(22) Anmeldetag: 20.07.2023
(51) Int. Cl.: B62D 65/02

(54) **VERFAHREN UND BEARBEITUNGSSTATION ZUM VERBINDEN VON BAUTEILEN EINER FAHRZEUGKAROSSERIE**

(30) Priorität: 04.08.2022 DE 102022208113; 15.08.2022 DE 102022208453
(71) Anmelder: thyssenkrupp Automotive Body Solutions GmbH, 74076 Heilbronn (DE); thyssenkrupp AG, 45143 Essen (DE)
(72) Erfinder: Presser, Heiko, 66629 Freisen (DE); Doering, Dominic, 66589 Merchweiler (DE)
(74) Vertreter: thyssenkrupp Intellectual Property GmbH

(57) **Zusammenfassung**

Die vorliegende Erfindung betrifft eine Bearbeitungsstation (1) und ein Verfahren zum Verbinden eines ersten Bauteils (101) mit einem zweiten Bauteil (102) in einer Bearbeitungsstation (1), wobei ein Werkstückträger (4) in eine Geometrie-Spannstation (2) der Bearbeitungsstation (1) verbracht wird, wobei ein Spannrahmen (3) der Bearbeitungsstation (1) in einer ersten Bewegung und der in die Geometrie-Spannstation (2) verbrachte Werkstückträger (4) in einer zweiten Bewegung jeweils aus einer Vorposition (PS1, PW1) simultan in eine Verbindungsposition (P2) verbracht werden, in der das erste Bauteil (101) mit dem zweiten Bauteil (102) verbunden wird.

## Beschreibung

Die Erfindung betrifft ein Verfahren zum Verbinden, insbesondere zum Fügen, eines ersten Bauteils einer Fahrzeugkarosserie mit einem zweiten Bauteil einer Fahrzeugkarosserie in einer Bearbeitungsstation, wobei ein Werkstückträger in eine Geometrie-Spannstation der Bearbeitungsstation verbracht wird. Auf dem Werkstückträger ist dabei insbesondere das zweite Bauteil oder eine das erste und das zweite Bauteil umfassende Bauteileanordnung angeordnet.

Ein Verfahren zum Zusammenbauen von Bauteilen einer Fahrzeugkarosserie in einer Bearbeitungsstation mit einer Geometrie-Spannvorrichtung ist im Stand der Technik beispielsweise aus der EP 1 890 929 B1 bekannt, wobei die Geometrie-Spannvorrichtung dort Geometriebox genannt wird.

Des Weiteren betrifft die Erfindung eine Bearbeitungsstation zum Verbinden, insbesondere zum Fügen, eines ersten Bauteils einer Fahrzeugkarosserie mit einem zweiten Bauteil einer Fahrzeugkarosserie umfassend eine Geometrie-Spannstation und einen Spannrahmen, wobei der Spannrahmen auf einer beweglich ausgebildeten Trageinheit angeordnet ist, die mittels einer ersten Antriebseinheit in eine erste Bewegungsrichtung bewegt werden kann, und wobei die Geometrie-Spannstation eine Aufnahmeeinheit aufweist, die zur Aufnahme eines Werkstückträgers ausgebildet ist.

Diese Bearbeitungsstationen dienen dazu, beispielsweise Fahrzeugkarosserieteile in einer vorgegebenen exakten Position, der Verbindungsposition, zu spannen und, insbesondere anschließend, durch einen Fügevorgang endgültig miteinander zu verbinden. Bei dem Fügevorgang kann es sich um Schweißen, Kleben, Nieten oder auch Clinchen handeln. Für den Vorgang des exakten Positionierens des einen Karosseriebauteils, beispielsweise einer Seitenwand, an ein anderes Karosseriebauteil, beispielsweise eine Bodengruppe, werden Spannrahmen eingesetrt. Ein oder mehrere dieser Spannrahmen können dabei in einem Magazinbereich vorgehalten beziehungsweise bevorratet werden und mittels einer Zuführvorrichtung in den Arbeitsbereich und zurück verfahren beziehungsweise transportiert werden. Ein Spannrahmen wird dabei im Stand der Technik insbesondere dazu verwendet, ein Karosseriebauteil, das in einem vorhergehenden Montageschritt an ein zweites Karosseriebauteil gelascht oder auch geclipst vorpositioniert wurde, in eine endgültige, konstruktiv vorgegebene Position zu bringen, wobei das zweite Bauteil in einer Geometrie-Spannstation von einem Werkstückträger gehalten wird. Der Werkstückträger, auch Skid genannt, wird dabei üblicherweise über eine Rollenbahn in die Geometrie-Spannstation verbracht.

Weiter ist es bekannt, den Spannrahmen als aufrechtstehenden, weitestgehend ebenen Tragrahmen auszubilden, an dem mehrere betätigbare Spanner gehalten sind, über die die Karosserieteile an vorbestimmten Punkten gegeneinander verspannt werden, um dort gefügt zu werden. Insbesondere ist es im Stand der Technik bekannt, dass ein Spannrahmen zum Verspannen von Karosserieteilen eine über eine Schwenkeinheit verschwenkbare Spanngruppe umfasst, wobei die Spanngruppe mittels der Schwenkeinheit eine Art Einfädelbewegung ausführen kann, um die Spanngruppe zum Verspannen von Bauteilen geeignet positionieren zu können. Insbesondere ist es auch bekannt, dass ein solcher Spannrahmen mehrere Spanngruppen aufweisen kann, die mittels mehrerer Schwenkeinheiten verschwenkbar sind.

Nachteilig im Stand der Technik ist dabei, dass diese Bearbeitungsstationen beziehungsweise die bekannten Verfahren zum Verbinden der Bauteile ein frontales Aufbringen des ersten Bauteils auf das zweite Bauteil vorsehen, insbesondere ein Verbinden der Bauteile unter einem fixen Verbindungswinkel von 180°. Hierdurch ist aber die Verwendung solcher Bearbeitungsstationen bei abweichenden Geometrien der Karosserie eingeschränkt. Weiter ist bei im Stand der Technik bekannten Bearbeitungsstationen nachteilig, dass die Schwenkeinheiten zum Verschwenken von Spanngruppen sehr groß und schwer ausfallen können. Da die Schwenkeinheiten zudem oftmals am oberen Ende des Spannrahmens angeordnet werden müssen, also an dem der Trageinheit abgewandten Ende und somit kopflastig, ergibt sich nicht selten eine ungünstige Schwerpunktverteilung, was sich nachteilig auf die Standzeiten der Bearbeitungsstation auswirken kann. Ein langsameres Verfahren der Spannrahmen kann zwar die Standzeiten verlängern, wirkt sich aber nachteilig auf die Taktzeit aus.

Vor diesem Hintergrund ist es eine Aufgabe der vorliegenden Erfindung, ein Verfahren zum Verbinden eines ersten Bauteils einer Fahrzeugkarosserie mit einem zweiten Bauteil einer Fahrzeugkarosserie in einer Bearbeitungsstation, die eine Geometrie-Spannstation und einen Spannrahmen umfasst, sowie eine solche Bearbeitungsstation zu verbessern. Insbesondere ist vorgesehen, dass ein von einem Verbindungswinkel von 180° abweichender Verbindungswinkel realisiert wird, wobei der Verbindungswinkel vorzugsweise anpassbar ist. Weiter vorteilhaft sollen die Nachteile einer kopflastig angeordneten Schwenkeinheit einer Spanngruppe vermieden werden.

Zur Lösung dieser Aufgabe werden ein Verfahren zum Fügen eines ersten Bauteils mit einem zweiten Bauteil sowie eine Bearbeitungsstation gemäß den unabhängigen Ansprüchen vorgeschlagen. Weitere vorteilhafte Ausgestaltungen der Erfindung sind in den abhängigen Ansprüchen und der Beschreibung beschrieben sowie in den Figuren dargestellt.

Die vorgeschlagene Lösung sieht ein Verfahren zum Verbinden, insbesondere zum Fügen, eines ersten Bauteils mit einem zweiten Bauteil in einer Bearbeitungsstation vor, wobei ein Werkstückträger in eine Geometrie-Spannstation der Bearbeitungsstation verbracht wird, ein Spannrahmen der Bearbeitungsstation in einer ersten Bewegung und der in die Geometrie-Spannstation verbrachte Werkstückträger in einer zweiten Bewegung jeweils aus einer Vorposition in eine Verbindungsposition verbracht werden, insbesondere simultan aus einer Vorposition in eine Verbindungsposition verbracht werden. In der Verbindungsposition wird dann das erste Bauteil mit dem zweiten Bauteil verbunden, wobei eine erste Bewegungsrichtung der ersten Bewegung und eine zweite Bewegungsrichtung der zweiten Bewegung nichtparallel sind.

Insbesondere ist vorgesehen, dass der Spannrahmen in einer Horizontalbewegung als erster Bewegung von seiner Vorposition in die Verbindungsposition verbracht wird. Der Werkstückträger wird insbesondere in einer Vertikalbewegung als zweiter Bewegung von seiner Vorposition in die Verbindungsposition verbracht. Vorteilhafterweise wird die erste Bewegung mit einer ersten Geschwindigkeit ausgeführt und die zweite Bewegung mit einer zweiten Geschwindigkeit ausgeführt. Insbesondere ist vorgesehen, dass die erste Geschwindigkeit ein von der zweiten Geschwindigkeit verschiedene Geschwindigkeit ist. Weiter vorteilhaft wird ein Winkel vorgegeben, unter dem der Spannrahmen und der Werkstückträger die Verbindungsposition erreichen sollen, wobei bei einer vorgegebenen ersten Bewegungsrichtung und einer vorgegebenen zweiten Bewegungsrichtung die erste Geschwindigkeit und die zweite Geschwindigkeit so bestimmt werden, dass der Spannrahmen und der Werkstückträger die Verbindungsposition unter dem vorgegebenen Winkel erreichen. Die Vorgabe des Winkels erfolgt insbesondere in Bezug zu einer zuvor festgelegten Bezugsebene. Als Bezugsebene kann dabei insbesondere der Boden, auf dem die Bearbeitungsstation steht, festgelegt werden.

Gemäß einer weiteren vorteilhaften Ausgestaltung wird ein Bewegungsablauf vorgegeben, gemäß dem der Spannrahmen und der Werkstückträger die Verbindungsposition erreichen sollen, wobei bei einer vorgegebenen ersten Bewegungsrichtung und einer vorgegebenen zweiten Bewegungsrichtung die erste Geschwindigkeit und die zweite Geschwindigkeit so bestimmt werden, dass der Spannrahmen und der Werkstückträger gemäß dem vorgegebenen Bewegungsablauf die Verbindungsposition erreichen.

Insbesondere ist zur Lösung der eingangs genannten Aufgabe ein Verfahren zum Verbinden, insbesondere zum Fügen, eines ersten Bauteils, insbesondere eines ersten Fahrzeugkarosseriebauteils, mit einem zweiten Bauteil, insbesondere einem zweiten Fahrzeugkarosseriebauteil, in einer Bearbeitungsstation vorgesehen, wobei das erste Bauteil in einen Spannrahmen der Bearbeitungsstation verbracht wird, das erste Bauteil in dem Spannrahmen fixiert wird, das zweite Bauteil auf einem Werkstückträger in eine Geometrie-Spannstation der Bearbeitungsstation verbracht wird, und der Spannrahmen mit dem ersten Bauteil in einer ersten Bewegung und der Werkstückträger mit dem zweiten Bauteil in einer zweiten Bewegung jeweils aus einer Vorposition simultan in eine Verbindungsposition verbracht werden, wobei eine erste Bewegungsrichtung der ersten Bewegung und eine zweite Bewegungsrichtung der zweiten Bewegung vorteilhafterweise nichtparallel sind. In der Verbindungsposition wird das erste Bauteil mit dem zweiten Bauteil vorteilhafterweise verspannt und verbunden; insbesondere kann ein Verschweißen nach dem Erreichen der Verbindungsposition vorgesehen sein.

Ausgehend von der Vorposition des Spannrahmens startet bei dieser Ausgestaltung des Verfahrens also vorteilhafterweise die erste Bewegung des Spannrahmens. Ausgehend von der Vorposition des Werkstückträgers startet vorteilhafterweise die zweite Bewegung des Werkstückträgers. Die jeweiligen Vorpositionen sind dabei vorteilhafterweise vorab festgelegt. Das erste Bauteil kann insbesondere eine Außenhaut beziehungsweise eine Seitenwand einer Fahrzeugkarosserie sein. Das zweite Bauteil kann insbesondere eine Bodengruppe einer Fahrzeugkarosserie sein. Dadurch, dass die erste Bewegungsrichtung der ersten Bewegung und die zweite Bewegungsrichtung der zweiten Bewegung vorteilhafterweise nichtparallel sind, erfolgt das Verbinden des ersten Bauteils mit dem zweiten Bauteil vorteilhafterweise unter einem von 180° abweichenden Verbindungswinkel. So wird das erste Bauteil vorteilhafterweise nicht frontal auf das zweite Bauteil aufgebracht, was bei einem Verbindungswinkel von 180° der Fall wäre, sondern das erste Bauteil wird vorteilhafterweise schräg auf das zweite Bauteil aufgebracht. Hierdurch ist es vorteilhafterweise ermöglicht, dass das erste Bauteil einen Hinterschnitt aufweist, und das erste Bauteil einfach schräg auf das zweite Bauteil aufgebracht wird, insbesondere ohne dass das zweite Bauteil in dem Werkstückträger anders ausgerichtet werden muss. Vorteilhafterweise kann das zweite Bauteil unabhängig von dem gewünschten Verbindungswinkel gleich ausgerichtet in dem Werkstückträger angeordnet werden. Der Werkstückträger, insbesondere ein Skid, wird vorteilhafterweise über eine Rollenbahn in die Geometrie-Spannstation verbracht, wobei der Werkstückträger dabei vorteilhafterweise bereits das zweite Bauteil trägt, insbesondere bei dieser Ausgestaltungsvariante des Verfahrens aber nicht das erste Bauteil. Neue Geometrien bei Bauteilen einer Fahrzeugkarosserie ergeben sich insbesondere bei der Fertigung von Elektrofahrzeugen, weil beispielsweise Batteriewannen zur Aufnahme von Batteriemodulen für ein Elektrofahrzeug andere Geometrien, die bei Fahrzeugen mit Verbrennungsmotoren nicht genutzt wurden, vorteilhaft oder sogar erforderlich machen.

Eine vorteilhafte Weiterbildung des Verfahrens sieht vor, dass der Spannrahmen mit dem ersten Bauteil in einer Horizontalbewegung als erster Bewegung von seiner Vorposition in die Verbindungsposition verbracht wird. Insbesondere ist vorgesehen, dass der Spannrahmen mit dem ersten Bauteil ausschließlich in der Horizontalbewegung bewegt werden kann. Vorteilhafterweise wird das erste Bauteil durch das Verfahren des Spannrahmens mit der Horizontalbewegung in die Geometriespannstation verbracht, wo insbesondere das Verbinden mit dem zweiten Bauteil erfolgt. Vorteilhafterweise ist das Ausführen der Horizontalbewegung einfach realisierbar, da eine solche auch beim im Stand der Technik bekannten frontalen Verbinden von Bauteilen einer Fahrzeugkarosserie ausgeführt wird.

Gemäß einer weiteren vorteilhaften Ausgestaltung des Verfahrens wird der Werkstückträger mit dem zweiten Bauteil in einer Vertikalbewegung als zweiter Bewegung von seiner Vorposition in die Verbindungsposition verbracht, insbesondere mittels eines Hubelements, das vorteilhafterweise den Werkstückträger mit dem zweiten Bauteil vertikal verfährt. Vorteilhafterweise wird also das erste Bauelement horizontal zu dem zweiten Bauelement verfahren, während das zweite Bauelement vorteilhafterweise zeitgleich vertikal verfahren wird, wodurch das erste Bauteil und das zweite Bauteil vorteilhafterweise unter einem von 180° verschiedenen Verbindungswinkel, und somit schräg, zusammengeführt werden. Vorteilhafterweise ist die Vertikalbewegung einfach steuerbar. Vorteilhafterweise muss das zweite Bauteil beziehungsweise der das zweite Bauteil tragende Werkstückträger nicht gekippt werden, um den gewünschten Verbindungswinkel zu erreichen.

Weiter vorteilhaft wird die erste Bewegung mit einer ersten Geschwindigkeit ausgeführt wird und die zweite Bewegung mit einer zweiten Geschwindigkeit ausgeführt. Ausgangspunkt für die jeweilige Bewegung ist dabei die jeweilige Vorposition. Die erste Geschwindigkeit und die zweite Geschwindigkeit können dabei gleich oder verschieden sein, aber insbesondere so, dass das erste Bauteil und das zweite Bauteil zeitgleich die Verbindungsposition erreichen. Insbesondere kann für die erste Geschwindigkeit, mit der das erste Bauteil von dem Spannrahmen in die erste Bewegungsrichtung bewegt wird, und/oder für die zweite Geschwindigkeit, mit der das zweite Bauteil von dem Werkstückhalter in die zweite Bewegungsrichtung bewegt wird, jeweils ein Geschwindigkeitsverlauf vorgegeben werden, insbesondere ein erster Geschwindigkeitsverlauf für die erste Geschwindigkeit beziehungsweise ein zweiter Geschwindigkeitsverlauf für die zweite Geschwindigkeit. Durch das Ausführen der Bewegungen des ersten Bauteils in die erste Bewegungsrichtung und des zweien Bauteils in die zweite Bewegungsrichtung lassen sich allein durch die Anpassung der ersten Geschwindigkeit und/oder der zweiten Geschwindigkeit vorteilhafterweise unterschiedliche Verbindungswinkel erzielen. Die erste Bewegungsrichtung und die zweite Bewegungsrichtung bleiben dabei vorteilhafterweise unverändert, was vorteilhafterweise die Auslegung der Antriebseinheiten vereinfacht und damit kostengünstig macht.

Insbesondere ist vorgesehen, dass ein Verbindungswinkel vorgegeben wird, unter dem das erste Bauteil und das zweite Bauteil zusammengeführt werden sollen, wobei bei einer vorgegebenen ersten Bewegungsrichtung und einer vorgegebenen zweiten Bewegungsrichtung die erste Geschwindigkeit und die zweite Geschwindigkeit so bestimmt werden, dass das erste Bauteil und das zweite Bauteil unter dem vorgegebenen Verbindungswinkel die Verbindungsposition erreichen. Insbesondere wird das erste Bauteil dabei stets in die Horizontalrichtung und das zweite Bauteil stets in die Vertikalrichtung bewegt. Nach dem Erreichen der Verbindungsposition werden das erste Bauteil und das zweite Bauteil vorteilhafterweise durch ein Fügen miteinander verbunden.

Des Weiteren ist insbesondere vorgesehen, dass ein Bewegungsablauf vorgegeben wird, gemäß dem das erste Bauteil und das zweite Bauteil zusammengeführt werden sollen, wobei bei einer vorgegebenen ersten Bewegungsrichtung und einer vorgegebenen zweiten Bewegungsrichtung die erste Geschwindigkeit und die zweite Geschwindigkeit so bestimmt werden, dass das erste Bauteil und das zweite Bauteil gemäß dem vorgegebenen Bewegungsablauf in die Verbindungsposition verbracht werden. Der Bewegungsablauf kann dabei insbesondere durch eine Punktfolge vorgegeben werden, insbesondere für eine Steuereinheit, mit der das Verfahren gesteuert wird. Der Bewegungsablauf kann insbesondere eine Bewegungskurve, eine Bewegungslinie oder eine gestufte Bewegung sein. Insbesondere wird das erste Bauteil dabei in die Horizontalrichtung und das zweite Bauteil in die Vertikalrichtung bewegt. Nach dem Erreichen der Verbindungsposition werden das erste Bauteil und das zweite Bauteil vorteilhafterweise durch ein Fügen miteinander verbunden.

Eine weitere vorteilhafte Ausgestaltung sieht vor, dass auf eine Verbindungsfläche des ersten Bauteils, die beim Verbinden des ersten Bauteils mit dem zweiten Bauteil das zweite Bauteil kontaktiert, vor dem Verbringen in die Verbindungsposition Kleber aufgebracht wird. Alternativ oder zusätzlich ist vorgesehen, dass auf eine Verbindungsfläche des zweiten Bauteils, die beim Verbinden des ersten Bauteils mit dem zweiten Bauteil das erste Bauteil kontaktiert, vor dem Verbringen in die Verbindungsposition Kleber aufgebracht wird. Dadurch, dass der Verbindungswinkel vorteilhafterweise geeignet vorgegeben werden kann, wird der aufgebrachte Kleber beim Fügen der Bauteile vorteilhafterweise nicht verwischt.

Weiter vorteilhaft ist vorgesehen, dass das erste Bauteil von einem Roboter in den Spannrahmen verbracht wird. Das erste Bauteil wird insofern insbesondere nicht vor dem Verbinden beziehungsweise vor dem Fügen an das zweite Bauteil geclipst beziehungsweise gelascht. Vorteilhafterweise ist der Spannrahmen in einer Aufnahmeposition, wenn das erste Bauteil in den Spannrahmen verbracht und fixiert wird. Der Spannrahmen wird dann vorteilhafterweise mit dem ersten Bauteil von der Aufnahmeposition in die Vorposition verbracht. Die Aufnahmeposition liegt dabei vorteilhafterweise räumlich vor der Vorposition. Eine Ausgestaltungsvariante kann auch vorsehen, dass die Aufnahmeposition mit der Vorposition zusammenfällt.

Eine weitere vorteilhafte Ausgestaltung des Verfahrens sieht vor, dass ein drittes Bauteil in einen weiteren Spannrahmen der Bearbeitungsstation verbracht wird, das dritte Bauteil in dem weiteren Spannrahmen fixiert wird. Zum Verbinden des dritten Bauteils mit dem zweiten Bauteil werden dann in Bezug auf den weiteren Spannrahmen die gleichen Verfahrensschritte ausgeführt werden, wie in Bezug auf den bereits beschriebenen Spannrahmen, nachfolgend erster Spannrahmen genannt. Das heißt, dass der weitere Spannrahmen mit dem dritten Bauteil insbesondere auch in einer dritten Bewegung und der Werkstückträger mit dem zweiten Bauteil in einer zweiten Bewegung jeweils aus einer Vorposition simultan in eine Verbindungsposition verbracht werden, in der dann das dritte Bauteil mit dem zweiten Bauteil verbunden wird, wobei eine dritte Bewegungsrichtung der dritten Bewegung und eine zweite Bewegungsrichtung der zweiten Bewegung insbesondere nichtparallel sind. Vorzugsweise wird der weitere Spannrahmen synchron zu dem ersten Spannrahmen bewegt. Insbesondere können so eine linke Seitenwand einer Fahrzeugkarosserie und eine rechte Seitenwand einer Fahrzeugkarosserie synchron mit einer Karosserie verbunden werden.

Als eine weitere vorteilhafte Ausgestaltungsvariante der Erfindung wird zur Lösung der eingangs genannten Aufgabe ein Verfahren zum Verbinden, insbesondere zum Fügen, eines ersten Bauteils, insbesondere eines ersten Fahrzeugkarosseriebauteils, mit einem zweiten Bauteil, insbesondere einem zweiten Fahrzeugkarosseriebauteil, in einer Bearbeitungsstation vorgeschlagen, wobei das zweite Bauteil und das erste Bauteil, das an dem zweiten Bauteil provisorisch angeordnet ist, eine Bauteileanordnung bilden, die auf einem Werkstückträger in eine Geometrie-Spannstation der Bearbeitungsstation verbracht wird. Dann werden ein Spannrahmen der Bearbeitungsstation, der eine Spanngruppe aufweist, in einer ersten Bewegung und der Werkstückträger mit der Bauteileanordnung in einer zweiten Bewegung jeweils aus einer Vorposition in eine Verbindungsposition verbracht. Eine erste Bewegungsrichtung der ersten Bewegung des Spannrahmens und eine zweite Bewegungsrichtung der zweiten Bewegung des Werkstückträgers sind nichtparallel. In der Verbindungsposition wird der Spannrahmen mit einem Fixierelement oder mehreren Fixierelementen der Geometriespannstation fixiert. In der Verbindungsposition wird dann das erste Bauteil mit dem zweiten Bauteil vorteilhafterweise verspannt und dann gefügt; insbesondere kann ein Verschweißen nach dem Erreichen der Verbindungsposition vorgesehen sein. Das erste Bauteil ist insbesondere gelascht oder auch geclipst als provisorische Anordnung an dem zweiten Bauteil vorpositioniert. Insbesondere ist vorgesehen, dass der Spannrahmen nicht nur eine Spanngruppe sondern auch mehrere Spanngruppen aufweisen kann. Nachfolgende Ausführungen zu einem Spannrahmen mit einer Spanngruppe gelten insofern entsprechend für einen Spannrahmen mit mehreren Spanngruppen und insbesondere auch mit mehreren Schwenkeinheiten.

Ausgehend von der Vorposition des Spannrahmens startet bei dieser Ausgestaltung des Verfahrens also vorteilhafterweise die erste Bewegung des Spannrahmens. Ausgehend von der Vorposition des Werkstückträgers startet vorteilhafterweise die zweite Bewegung des Werkstückträgers. Die jeweiligen Vorpositionen sind dabei vorteilhafterweise vorab festgelegt. Das erste Bauteil kann insbesondere eine Außenhaut beziehungsweise eine Seitenwand einer Fahrzeugkarosserie sein. Das zweite Bauteil kann insbesondere eine Bodengruppe einer Fahrzeugkarosserie sein. Dadurch, dass die erste Bewegungsrichtung der ersten Bewegung und die zweite Bewegungsrichtung der zweiten Bewegung vorteilhafterweise nichtparallel sind, erfolgt das Zusammenführen der Spanngruppe des Spannrahmens und der auf dem Werkstückträger angeordneten Bauteileanordnung vorteilhafterweise unter einem von 180° abweichenden Winkel. So wird die Spanngruppe vorteilhafterweise nicht lediglich frontal auf die Bauteileanordnung zubewegt, was bei einem Winkel von 180° der Fall wäre. Stattdessen wird durch den Gesamtbewegungsablauf aus erster Bewegung und zweiter Bewegung vorteilhafterweise die Spanngruppe schräg mit der Bauteilegruppe zusammengeführt. Hierdurch ist es vorteilhafterweise ermöglicht, dass eine Schwenkeinheit zum Verschwenken der Spanngruppe entfallen kann, da die Spanngruppe durch den Gesamtbewegungsablauf aus erster Bewegung und zweiter Bewegung vorteilhafterweise "Hindernisse", wie vorstehende Karosserieelemente, auf dem Weg in die Verbindungsposition vorteilhafterweise umfahren kann. Insbesondere ist vorgesehen, dass der Spannrahmen und der Werkstückträger simultan in die Verbindungsposition verbracht werden.

Vorteilhafterweise kann die Bauteileanordnung unabhängig von dem gewünschten Winkel, unter dem der Spannrahmen beziehungsweise die Spanngruppe mit der Bauteileanordnung zusammengeführt werden soll, gleich ausgerichtet in dem Werkstückträger angeordnet werden. Der Werkstückträger, insbesondere ein Skid, wird vorteilhafterweise über eine Rollenbahn in die Geometrie-Spannstation verbracht, wobei der Werkstückträger dabei vorteilhafterweise bereits die Bauteileanordnung trägt.

Eine vorteilhafte Ausgestaltung des Verfahrens sieht vor, dass der Spannrahmen in einer Horizontalbewegung als erster Bewegung von seiner Vorposition in die Verbindungsposition verbracht wird. Insbesondere ist vorgesehen, dass der Spannrahmen ausschließlich in der Horizontalbewegung bewegt werden kann. Vorteilhafterweise ist das Ausführen der Horizontalbewegung einfach realisierbar, da eine solche auch beim im Stand der Technik bekannten Verbinden von Bauteilen einer Fahrzeugkarosserie in einer Bearbeitungsstation ausgeführt wird.

Gemäß einer weiteren vorteilhaften Ausgestaltung des Verfahrens wird der Werkstückträger mit der Bauteileanordnung in einer Vertikalbewegung als zweiter Bewegung von seiner Vorposition in die Verbindungsposition verbracht, insbesondere mittels eines Hubelements, das vorteilhafterweise den Werkstückträger mit der Bauteileanordnung vertikal verfährt. Vorteilhafterweise wird also der Spannrahmen mit der Spanngruppe horizontal in die Bearbeitungsstation verfahren, während die Bauteileanordnung vorteilhafterweise zeitgleich vertikal verfahren wird, wodurch der Spannrahmen beziehungsweise die Spanngruppe des Spannrahmens vorteilhafterweise unter einem von 180° verschiedenen Winkel, und somit schräg, mit der Bauteileanordnung zusammengeführt wird. Vorteilhafterweise ist die Vertikalbewegung einfach steuerbar. Vorteilhafterweise muss die Bauteileanordnung beziehungsweise der die Bauteileanordnung tragende Werkstückträger nicht gekippt werden, um den gewünschten Winkel zum Zusammenführen zu erreichen.

Weiter vorteilhaft wird die erste Bewegung mit einer ersten Geschwindigkeit ausgeführt wird und die zweite Bewegung mit einer zweiten Geschwindigkeit ausgeführt. Ausgangspunkt für die jeweilige Bewegung ist dabei die jeweilige Vorposition. Die erste Geschwindigkeit und die zweite Geschwindigkeit können dabei gleich oder verschieden sein. Insbesondere werden die erste Geschwindigkeit und die zweite Geschwindigkeit aber so bestimmt, dass der Spannrahmen beziehungsweise die Spanngruppe und die Bauteileanordnung zeitgleich die Verbindungsposition erreichen. Insbesondere kann für die erste Geschwindigkeit, mit der der Spannrahmen in die erste Bewegungsrichtung bewegt wird, und/oder für die zweite Geschwindigkeit, mit der die Bauteileanordnung von dem Werkstückhalter in die zweite Bewegungsrichtung bewegt wird, jeweils ein Geschwindigkeitsverlauf vorgegeben werden, insbesondere ein erster Geschwindigkeitsverlauf für die erste Geschwindigkeit beziehungsweise ein zweiter Geschwindigkeitsverlauf für die zweite Geschwindigkeit. Durch das Ausführen der Bewegungen des Spannrahmens in die erste Bewegungsrichtung und der Bauteileanordnung in die zweite Bewegungsrichtung lassen sich allein durch die Anpassung der ersten Geschwindigkeit und/oder der zweiten Geschwindigkeit vorteilhafterweise unterschiedliche Winkel, unter denen der Spannrahmen beziehungsweise die Spanngruppe mit der Bauteileanordnung zusammengeführt werden, erzielen. Die erste Bewegungsrichtung und die zweite Bewegungsrichtung bleiben dabei vorteilhafterweise unverändert, was vorteilhafterweise die Auslegung der Antriebseinheiten vereinfacht und damit kostengünstig macht.

Insbesondere ist vorgesehen, dass ein Winkel vorgegeben wird, unter dem die Spanngruppen des Spannrahmens und die Bauteileanordnung zusammengeführt werden sollen, wobei bei einer vorgegebenen ersten Bewegungsrichtung und einer vorgegebenen zweiten Bewegungsrichtung die erste Geschwindigkeit und die zweite Geschwindigkeit so bestimmt werden, dass die Spanngruppe und die Bauteileanordnung unter dem vorgegebenen Winkel die Verbindungsposition erreichen. Insbesondere wird der Spannrahmen dabei stets in die Horizontalrichtung und die Bauteileanordnung stets in die Vertikalrichtung bewegt. Nach dem Erreichen der Verbindungsposition werden das erste Bauteil und das zweite Bauteil vorteilhafterweise durch ein Fügen miteinander verbunden.

Des Weiteren ist insbesondere vorgesehen, dass ein Bewegungsablauf vorgegeben wird, gemäß dem die Spanngruppen des Spannrahmens und die Bauteileanordnung zusammengeführt werden sollen, wobei bei einer vorgegebenen ersten Bewegungsrichtung und einer vorgegebenen zweiten Bewegungsrichtung die erste Geschwindigkeit und die zweite Geschwindigkeit so bestimmt werden, dass die Spanngruppe und die Bauteileanordnung gemäß dem vorgegebenen Bewegungsablauf die Verbindungsposition erreichen. Der Bewegungsablauf kann dabei insbesondere durch eine Punktfolge vorgegeben werden, insbesondere für eine Steuereinheit, mit der das Verfahren gesteuert wird. Der Bewegungsablauf kann insbesondere eine Bewegungskurve, eine Bewegungslinie oder eine gestufte Bewegung sein. Insbesondere wird der Spannrahmen dabei in die Horizontalrichtung und der Werkstückträger mit der Bauteileanordnung in die Vertikalrichtung bewegt. Nach dem Erreichen der Verbindungsposition werden das erste Bauteil und das zweite Bauteil vorteilhafterweise durch ein Fügen miteinander verbunden.

Insbesondere ist vorgesehen, dass das von der Spanngruppe keine Relativbewegung zu dem Spannrahmen ausgeführt wird, die Spanngruppe also insbesondere nicht zusätzlich zu der Bewegung des Spannrahmens verschwenkt wird, um die Verbindungsposition zu erreichen. Eine Schwenkeinheit zum Verschwenken der Spanngruppe relativ zu dem Spannrahmen ist somit vorteilhafterweise entbehrlich.

Eine weitere vorteilhafte Ausgestaltung des Verfahrens sieht vor, dass die Bauteileanordnung ein drittes Bauteil umfasst, das an dem zweiten Bauteil provisorisch angeordnet ist, insbesondere indem das dritte Bauteil an das zweite Bauteil gelascht oder geclipst ist. Vorteilhafterweise werden dann ein weiterer Spannrahmen der Bearbeitungsstation, der eine weitere Spanngruppe aufweist, in einer dritten Bewegung aus einer Vorposition des weiteren Spannrahmens und der Werkstückträger mit der Bauteileanordnung aus seiner Vorposition in der zweiten Bewegung in eine Verbindungsposition verbracht, insbesondere simultan verbracht, wobei der weitere Spannrahmen in der Verbindungsposition mit einem weiteren Fixierelement der Geometrie-Spannstation fixiert wird, und wobei in Bezug auf den weiteren Spannrahmen die gleichen Verfahrensschritte ausgeführt werden, wie in Bezug auf den zuvor genannten Spannrahmen, nachfolgend auch erster Spannrahmen genannt. Das heißt, dass der weitere Spannrahmen insbesondere auch in einer dritten Bewegung und der Werkstückträger mit der Bauteileanordnung in einer zweiten Bewegung jeweils aus einer Vorposition simultan in eine Verbindungsposition verbracht werden, in der dann das dritte Bauteil mit dem zweiten Bauteil gefügt wird, wobei eine dritte Bewegungsrichtung der dritten Bewegung und eine zweite Bewegungsrichtung der zweiten Bewegung insbesondere nichtparallel sind. Vorzugsweise wird der weitere Spannrahmen synchron zu dem ersten Spannrahmen bewegt. Insbesondere können so eine linke Seitenwand einer Fahrzeugkarosserie und eine rechte Seitenwand einer Fahrzeugkarosserie synchron mit einer Karosserie verbunden werden.

Die des Weiteren zur Lösung der eingangs genannten Aufgabe vorgesehene Bearbeitungsstation zum Verbinden, insbesondere zum Fügen, eines ersten Bauteils einer Fahrzeugkarosserie mit einem zweiten Bauteil einer Fahrzeugkarosserie umfasst eine Geometrie-Spannstation und einen Spannrahmen, wobei der Spannrahmen auf einer beweglich ausgebildeten Trageinheit angeordnet ist, die mittels einer ersten Antriebseinheit in eine erste Bewegungsrichtung bewegt werden kann. Zudem weist die Geometrie-Spannstation eine Aufnahmeeinheit auf, die zur Aufnahme eines Werkstückträgers ausgebildet ist, wobei der Aufnahmeeinheit eine zweite Antriebseinheit zugeordnet ist, mit der die Aufnahmeeinheit in eine zweite Bewegungsrichtung bewegt werden kann. Die erste Bewegungsrichtung und die zweite Bewegungsrichtung sind dabei nichtparallel. Des Weiteren ist der Bearbeitungsstation eine Steuereinheit zugeordnet, die ausgebildet ist, die erste Antriebseinheit und die zweite Antriebseinheit derart zu steuern, dass der Spannrahmen und der Werkstückträger in eine Verbindungsposition verbracht werden.

Vorteilhafterweise ist die Trageinheit ausgebildet, mittels der ersten Antriebseinheit in einer Horizontalrichtung als erster Bewegungsrichtung bewegt zu werden. Weiter vorteilhaft ist die Aufnahmeeinheit ausgebildet, mittels der zweiten Antriebseinheit in Vertikalrichtung als zweiter Bewegungsrichtung bewegt zu werden, insbesondere mittels einer Hubeinheit. Bevorzugt ist die Bearbeitungsstation zur Ausführung eines erfindungsgemäß ausgestalteten Verfahrens ausgebildet.

Insbesondere ist zur Lösung der eingangs genannten Aufgabe eine Bearbeitungsstation zum Verbinden, insbesondere zum Fügen, eines ersten Bauteils einer Fahrzeugkarosserie mit einem zweiten Bauteil einer Fahrzeugkarosserie vorgesehen, die eine Geometrie-Spannstation und einen Spannrahmen umfasst. Der Spannrahmen ist bei dieser Ausgestaltungsvariante zur Aufnahme des ersten Bauteils ausgebildet und auf einer beweglich ausgebildeten Trageinheit angeordnet, wobei die Trageinheit mittels einer ersten Antriebseinheit in eine erste Bewegungsrichtung bewegt werden kann. Ein von dem Spannrahmen aufgenommenes erstes Bauteil kann so vorteilhafterweise in die erste Bewegungsrichtung bewegt werden. Die Geometrie-Spannstation der Bearbeitungsstation weist bei dieser Ausgestaltungsvariante eine Aufnahmeeinheit auf, die zur Aufnahme eines das zweite Bauteil tragenden Werkstückträgers ausgebildet ist. Der Aufnahmeeinheit ist dabei eine zweite Antriebseinheit zugeordnet, mit der die Aufnahmeeinheit in eine zweite Bewegungsrichtung bewegt werden kann. Die erste Bewegungsrichtung und die zweite Bewegungsrichtung sind dabei vorteilhafterweise nichtparallel. Des Weiteren ist der Bearbeitungsstation eine Steuereinheit zugeordnet. Insbesondere ist vorgesehen, dass die Bearbeitungsstation die Steuereinheit aufweist. Die Steuereinheit ist dabei insbesondere eine elektronische Steuereinheit, die insbesondere eine entsprechend eingerichtete Recheneinheit, insbesondere eine Mikrocontrollereinheit, ist. Die Steuereinheit ist ausgebildet, die erste Antriebseinheit und die zweite Antriebseinheit derart zu steuern, dass ein von dem Spannrahmen aufgenommenes erstes Bauteil und ein von der Aufnahmeeinheit über einen Werkstückträger aufgenommenes zweites Bauteil simultan in eine Verbindungsposition verbracht werden, in der das erste Bauteil mit dem zweiten Bauteil verbunden, insbesondere gefügt wird. Vorteilhafterweise ermöglicht es die Bearbeitungsstation so, unterschiedliche Verbindungswinkel, unter denen die Bauelemente in die Verbindungsposition zum anschließenden Fügen der Bauelemente verbracht werden sollen, vorzugeben. Das erste Bauelement ist insbesondere eine Seitenwand einer Fahrzeugkarosserie beziehungsweise eine Außenhaut einer Seitenwand einer Fahrzeugkarosserie. Das zweite Bauteil ist insbesondere die Grundkarosserie beziehungsweise eine Bodengruppe einer Fahrzeugkarosserie.

Gemäß einer vorteilhaften Ausgestaltung dieser Bearbeitungsstation ist die Trageinheit ausgebildet, mittels der ersten Antriebseinheit in einer Horizontalrichtung als erster Bewegungsrichtung bewegt zu werden, insbesondere zu der Aufnahmeeinheit bewegt zu werden. Ein von dem Spannrahmen aufgenommenes erstes Bauteil kann so vorteilhafterweise in einer Horizontalbewegung in die Geometrie-Spannstation eingebracht werden. Insbesondere ist vorgesehen, dass die Trageinheit ein horizontal verfahrbarer Schlitten ist.

Eine weitere vorteilhafte Ausgestaltung der Bearbeitungsstation sieht vor, dass die Aufnahmeeinheit ausgebildet ist, mittels der zweiten Antriebseinheit in Vertikalrichtung als zweiter Bewegungsrichtung bewegt zu werden, insbesondere mittels einer Hubeinheit. Insbesondere ist vorgesehen, dass die Aufnahmeeinheit auf einer Hubeinheit angeordnet ist. Insbesondere kann die Aufnahmeeinheit Teil der Hubeinheit sein.

Vorteilhafterweise ist die Bearbeitungsstation zur Ausführung eines erfindungsgemäß ausgebildeten Verfahrens ausgebildet. Dabei kann die Bearbeitungsstation insbesondere auch eine Bedienschnittstelle zur Vorgabe eines Verbindungswinkels und/oder eines Bewegungsablaufs durch einen Nutzer umfassen. Des Weiteren kann die Bearbeitungsstation insbesondere auch einen Roboter umfassen, mit dem ein erstes Bauteil in den Spannrahmen verbracht werden kann. Weiter vorteilhaft kann die Geometrie-Spannstation eine Rollenbahn- oder einen Rollenbahnabschnitt umfassen, worüber vorteilhafterweise ein zweites Bauteil in die Geometrie-Spannstation verbracht werden kann. Insbesondere ist vorgesehen, dass der Rollenbahnabschnitt dabei auf dem Hubelement angeordnet ist. Des Weiteren kann die Bearbeitungsstation insbesondere wenigstens einen weiteren Spannrahmen umfassen, mit dem ein weiteres Bauteil an dem zweiten Bauteil angeordnet werden kann.

Darüber hinaus ist zur Lösung der eingangs genannten Aufgabe eine Bearbeitungsstation zum Fügen eines ersten Bauteils einer Fahrzeugkarosserie mit einem zweiten Bauteil einer Fahrzeugkarosserie vorgesehen, wobei das zweite Bauteil und das erste Bauteil, das an dem zweiten Bauteil provisorisch angeordnet ist, eine Bauteilanordnung bilden. Diese Bearbeitungsstation umfasst eine Geometrie-Spannstation, einen Spannrahmen mit einer Spanngruppe und mindestens ein Fixierelement zum Fixieren des Spannrahmens in einer Verbindungsposition. Insbesondere ist auch hier vorgesehen, dass der Spannrahmen nicht nur eine Spanngruppe sondern auch mehrere Spanngruppen aufweisen kann. Der Spannrahmen ist dabei auf einer beweglich ausgebildeten Trageinheit angeordnet, wobei die Trageinheit mittels einer ersten Antriebseinheit in eine erste Bewegungsrichtung bewegt werden kann. Die Geometrie-Spannstation der Bearbeitungsstation weist eine Aufnahmeeinheit auf, die zur Aufnahme eines die Bauteileanordnung tragenden Werkstückträgers ausgebildet ist. Der Aufnahmeeinheit ist dabei eine zweite Antriebseinheit zugeordnet, mit der die Aufnahmeeinheit in eine zweite Bewegungsrichtung bewegt werden kann. Die erste Bewegungsrichtung und die zweite Bewegungsrichtung sind dabei vorteilhafterweise nichtparallel. Des Weiteren ist der Bearbeitungsstation eine Steuereinheit zugeordnet. Insbesondere ist vorgesehen, dass die Bearbeitungsstation die Steuereinheit aufweist. Die Steuereinheit ist dabei insbesondere eine elektronische Steuereinheit, die insbesondere eine entsprechend eingerichtete Recheneinheit, insbesondere eine Mikrocontrollereinheit, ist. Die Steuereinheit ist ausgebildet, die erste Antriebseinheit und die zweite Antriebseinheit derart zu steuern, dass die Spanngruppe des Spannrahmens und eine von der Aufnahmeeinheit über einen Werkstückträger aufgenommene Bauteileanordnung in eine Verbindungsposition verbracht werden, insbesondere simultan in die Verbindungsposition verbracht werden, wobei das erste Bauteil mit dem zweiten Bauteil in der Verbindungsposition gefügt, insbesondere verschweißt, werden kann. Vorteilhafterweise ermöglicht es die Bearbeitungsstation so, unterschiedliche Winkel, unter denen die Spanngruppe und die Bauteileanordnung zusammengeführt werden sollen, vorzugeben. Das erste Bauelement ist insbesondere eine Seitenwand einer Fahrzeugkarosserie beziehungsweise eine Außenhaut einer Seitenwand einer Fahrzeugkarosserie. Das zweite Bauteil ist insbesondere die Grundkarosserie beziehungsweise eine Bodengruppe einer Fahrzeugkarosserie.

Gemäß einer vorteilhaften Ausgestaltung ist die Trageinheit ausgebildet, mittels der ersten Antriebseinheit in einer Horizontalrichtung als erster Bewegungsrichtung bewegt zu werden, insbesondere in einer Horizontalrichtung zu der Aufnahmeeinheit bewegt zu werden. Insbesondere ist vorgesehen, dass die Trageinheit ein horizontal verfahrbarer Schlitten ist.

Eine weitere vorteilhafte Ausgestaltung der Bearbeitungsstation sieht vor, dass die Aufnahmeeinheit ausgebildet ist, mittels der zweiten Antriebseinheit in Vertikalrichtung als zweiter Bewegungsrichtung bewegt zu werden, insbesondere mittels einer Hubeinheit. Insbesondere ist vorgesehen, dass die Aufnahmeeinheit auf einer Hubeinheit angeordnet ist. Insbesondere kann die Aufnahmeeinheit Teil der Hubeinheit sein.

Vorteilhafterweise ist die Bearbeitungsstation zur Ausführung eines erfindungsgemäß ausgebildeten Verfahrens ausgebildet. Dabei kann die Bearbeitungsstation insbesondere auch eine Bedienschnittstelle zur Vorgabe eines Winkels, unter dem die Spanngruppe und die Bauteileanordnung zusammengeführt werden soll, und/oder eines Bewegungsablaufs durch einen Nutzer umfassen. Des Weiteren kann die Bearbeitungsstation insbesondere auch einen Roboter umfassen, mit dem die Bauteile zu der Bauteileanordnung vorpositioniert werden können. Weiter vorteilhaft kann die Geometrie-Spannstation eine Rollenbahn- oder einen Rollenbahnabschnitt umfassen, worüber vorteilhafterweise eine zu fügende Bauteileanordnung in die Geometrie-Spannstation verbracht werden kann. Insbesondere ist vorgesehen, dass der Rollenbahnabschnitt dabei auf dem Hubelement angeordnet ist. Gemäß einer alternativen Ausgestaltung kann die Bauteileanordnung auch von der Rollenbahn in die entsprechende Höhe gehoben werden, insbesondere mit einer entsprechend ausgebildeten Spanntechnik auf dem Hubelement. Des Weiteren kann die Bearbeitungsstation insbesondere wenigstens einen weiteren Spannrahmen umfassen, mit dem ein weiteres Bauteil der Bauteileanordnung in einer Verbindungsposition verspannt werden kann, um das weitere Bauteil und das zweite Bauteil durch Fügen, insbesondere durch Schweißen, zu verbinden.

Vorteilhafterweise umfasst der Spannrahmen keine Schwenkeinheit zum Verschwenken der Spanngruppe relativ zu dem Spannrahmen. Vorteilhafterweise sind durch die erfindungsgemäß vorgesehene Verfahrbarkeit von Spannrahmen und Werkstückträger Schwenkeinheiten beziehungsweise verschwenkbare Spanngruppen entbehrlich. Vorteilhafterweise lässt sich so ein gewichtsreduzierter Spannrahmen verwenden. Vorteilhafterweise wird zudem Bauraum gewonnen, der insbesondere für den Einsatz von Roboter-Schweißzangen genutzt werden kann. Vorteilhafterweise lassen sich so beim Fügen der Bauteile mehr Schweißpunkte setzen, was vorteilhafterweise die Verbindung der Bauteile verbessert beziehungsweise dazu genutzt werden kann, um die Taktzeit zu verkürzen.

Weitere vorteilhafte Einzelheiten, Merkmale und Ausgestaltungsdetails der Erfindung werden im Zusammenhang mit den in den Figuren (Fig.: Figur) dargestellten Ausführungsbeispielen näher erläutert. Dabei zeigt:
- Fig. 1a: in einer vereinfachten Seitenansicht eine im Stand der Technik bekannte Bearbeitungsstation in einer Vorposition;
- Fig. 1b: in einer vereinfachten Seitenansicht die Bearbeitungsstation gemäß Fig. 1a in einer Verbindungsposition;
- Fig. 2a: in einer vereinfachten Seitenansicht ein Ausführungsbeispiel für eine erfindungsgemäß ausgebildete Bearbeitungsstation in einer Aufnahmeposition für ein erstes Bauteil;
- Fig. 2b: in einer vereinfachten Seitenansicht die Bearbeitungsstation gemäß Fig. 2a in einer Vorposition;
- Fig. 2c: in einer vereinfachten Seitenansicht die Bearbeitungsstation gemäß Fig. 2a in einer Verbindungsposition;
- Fig. 3a Bis Fig. 3e: Ausführungsbeispiele für eine Vorgabe einer ersten Geschwindigkeit und einer zweiten Geschwindigkeit zum Bewegen des ersten Bauteils und des zweiten Bauteils in die Verbindungsposition;
- Fig. 4a: die Problematik eines Fügens zweier Bauteile unter einem Verbindungswinkel von 180°;
- Fig. 4b: ein Fügen zweier Bauteile gemäß einem erfindungsgemäß ausgebildeten Verfahren unter einem von 180° verschiedenen Verbindungswinkel;
- Fig. 5a: in einer vereinfachten Seitenansicht eine weitere im Stand der Technik bekannte Bearbeitungsstation in einer Vorposition;
- Fig. 5b: in einer vereinfachten Seitenansicht einen Spannrahmen mit verschwenkbarer Spanngruppe einer im Stand der Technik bekannten Bearbeitungsstation;
- Fig. 5c: in einer vereinfachten Seitenansicht einen Spannrahmen mit verschwenkbarer Spanngruppe einer im Stand der Technik bekannten Bearbeitungsstation;
- Fig. 6a: in einer vereinfachten Seitenansicht ein weiteres Ausführungsbeispiel für eine erfindungsgemäß ausgebildete Bearbeitungsstation in einer Vorposition;
- Fig. 6b: in einer vereinfachten Seitenansicht die Bearbeitungsstation gemäß Fig. 6a in einer Verbindungsposition;
- Fig. 6c: in einer vereinfachten Seitenansicht einen Spannrahmen mit Spanngruppe für eine Bearbeitungsstation gemäß Fig. 6a; und
- Fig. 7a bis Fig. 7e: Ausführungsbeispiele für eine Vorgabe einer ersten Geschwindigkeit und einer zweiten Geschwindigkeit zum Bewegen des Spannrahmens und der Bauteileanordnung in die Verbindungsposition.

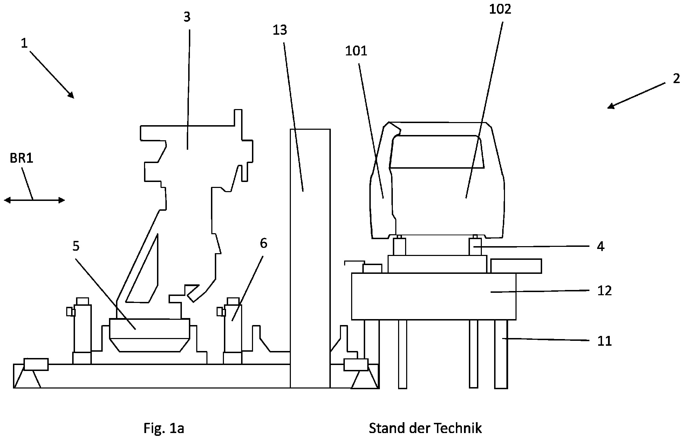

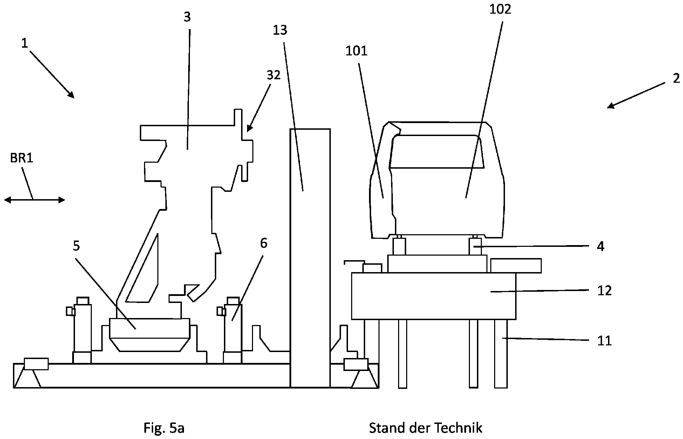

In den verschiedenen Figuren sind gleiche Teile in der Regel mit den gleichen Bezugszeichen versehen und werden daher mitunter auch jeweils nur im Zusammenhang mit einer der Figuren erläutert. Insbesondere wird unter Bezugnahme auf Fig.1a bis Fig. 4b eine erste Ausgestaltungsvariante der Erfindung erläutert und unter Bezugnahme auf Fig. 5a bis Fig. 7e eine zweite Ausgestaltungsvariante der Erfindung.

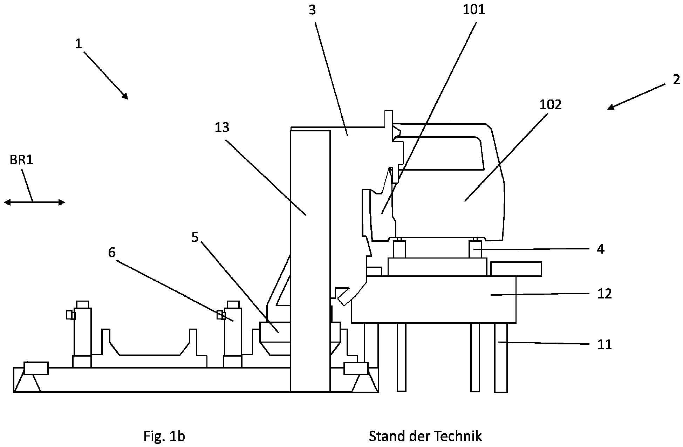

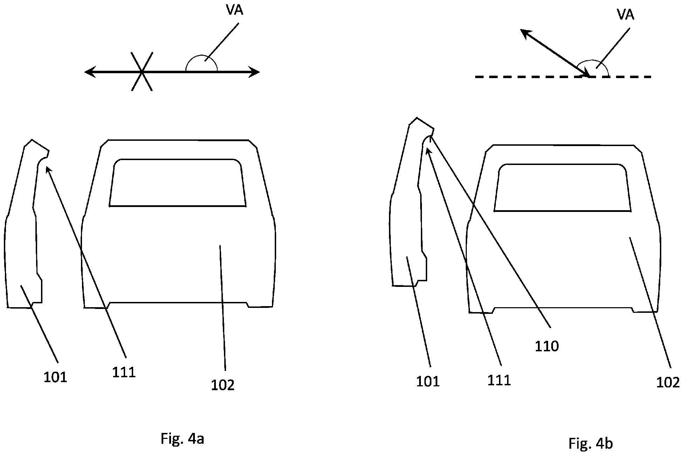

In Fig. 1a ist eine im Stand der Technik bekannte Bearbeitungsstation 1 mit einer Geometrie-Spannstation 2 und einem in Horizontalrichtung BR1 verfahrbaren Spannrahmen 3. Eine Seitenwand 101 als erstes Bauteil wird dabei an eine Karosserie 102 als zweites Bauteil geclipst, bevor die Bauelemente 101, 102 in die Geometrie-Spannstation 2 verbracht werden. Dabei fährt die Karosserie mit einem Skid als Werkstückträger 4 über eine Rollenbahn 12 mit einer Aufständerung 11 in die Geometrie-Spannstation 2 ein. Der Spannrahmen 3 wird dann in Horizontalrichtung BR1 an die Geometrie-Spannstation 2 verfahren und dort an einem Fixierelement 13 verspannt, wie in Fig. 1b gezeigt. Der Spannrahmen 3 spannt dann die Karosserie 102 und die Seitenwand 101 in einer Verbindungsposition und ein Schweißprozess zum Verbinden der Seitenwand 101 mit der Karosserie 102 startet. Problematisch dabei ist unter anderem, dass auf diese Weise eine Seitenwand 101 mit einem Hinterschnitt 111, wie in Fig. 4b gezeigt, nicht mit einer Karosserie 102 mit einer solchen Horizontalbewegung BR1 des Spannrahmens 3 bei einem Verbindungswinkel VA von 180°, wie in Fig. 1a und Fig. 1b gezeigt, verbunden werden kann.

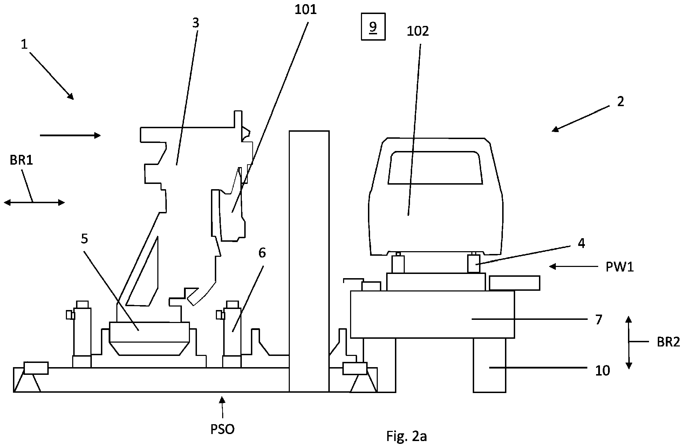

Dieses Problem lässt sich dadurch lösen, dass ein von 180° verschiedener Verbindungswinkel VA, wie in Fig. 4b gezeigt, wird, vorgegeben wird, mit dem die Seitenwand 101 und die Karosserie 102 in einer Verbindungsposition verbunden werden. Ein Verfahren und eine Bearbeitungsstation, die geeignet sind, eine Seitenwand 101 als erstes Bauteil mit einer Karosserie 102 als zweitem Bauteil auch bei Vorhandensein eines solchen Hinterschnitts 111 zu verbinden, wird unter Bezugnahme auf Fig. 2a bis Fig. 2c näher erläutert.

Fig. 2a zeigt dabei ein Ausführungsbeispiel für eine erfindungsgemäß ausgebildete Bearbeitungsstation 1 zum Verbinden eines ersten Bauteils 101 mit einem zweiten Bauteil 102, wobei in diesem Ausführungsbeispiel das erste Bauteil 101 eine Seitenwand als Karosseriebauteil ist und das zweite Bauteil 102 eine Karosserie ist. Die Bearbeitungsstation 1 umfasst eine Geometrie-Spannstation 2, auch Geobox genannt, und einen zur Aufnahme des ersten Bauteils 101 ausgebildeten Spannrahmen 3. Der Spannrahmen 3 ist auf einer beweglich ausgebildeten Trageinheit 5 angeordnet. Die Trageinheit 5 und damit auch der Spannrahmen 3 sind mittels einer ersten Antriebseinheit 6, die hier insbesondere einen Elektromotor umfasst, in eine Horizontalrichtung als erste Bewegungsrichtung BR1 verfahrbar. Die Antriebseinheit 6 wird dabei von einer elektronischen Steuereinheit 9 der Bearbeitungsstation 1 gesteuert.

In Fig. 2a ist dabei nur ein Spannrahmen 3 links von der Geometrie-Spannstation 2 dargestellt, wobei insbesondere zum Anbringen von Seitenwänden an eine Karosserie ein weiterer Spannrahmen rechts der Geometrie-Spannstation 2 vorgesehen sein kann, wobei der weitere Spannrahmen vorteilhafterweise in gleicher Weise gesteuert wird, wie der Spannrahmen 3, sodass beide Spannrahmen vorteilhafterweise die gleichen Verfahrensschritte ausführen, insbesondere synchron.

In Fig. 2a ist die Bearbeitungsstation 1 gezeigt, bei der sich der Spannrahmen 3 in einer Aufnahmeposition PS0 befindet. In dieser Aufnahmeposition PS0 wird die Seitenwand 101 in den Spannrahmen 3 eingebracht, insbesondere mittels eines in Fig. 2a nicht dargestellten Roboters, und in dem Spannrahmen 3 zur Fixierung eingespannt.

Die Geometrie-Spannstation 2 der Bearbeitungsstation 1 umfasst eine Aufnahmeeinheit 7, die in diesem Ausführungsbeispiel als Abschnitt einer Rollenbahn ausgebildet ist. Die Aufnahmeeinheit 7 der Geometrie-Spannstation 2 ist zur Aufnahme eines die Karosserie 102 tragenden Werkstückträgers 4 ausgebildet, wobei der Werkstückträger 4 in diesem Ausführungsbeispiel ein Skid ist. Die Karosserie 102 wird dabei in diesem Ausführungsbeispiel auf dem Werkstückträger 4 angeordnet über ein Rollenbahnsystem in die Geometrie-Spannstation 2 verbracht, wobei der Werkstückträger 4 von der Aufnahmeeinheit 7 aufgenommen wird. Die Aufnahmeeinheit 7 ist dabei auf einer eine zweite Antriebseinheit umfassenden Hubeinheit 10 angeordnet. Mittels dieser der Aufnahmeeinheit 7 zugeordneten Hubeinheit 10 kann die Aufnahmeeinheit 7 in eine Vertikalrichtung als zweite Bewegungsrichtung BR2 bewegt werden. Die zweite Antriebseinheit beziehungsweise die Hubeinheit 10 wird dabei ebenfalls mittels der Steuereinheit 9 der Bearbeitungsstation 1 gesteuert. In Fig. 2a ist der Werkstückträger 4 mittels der Hubeinheit 10 dabei abgesenkt und in eine Vorposition PW1 verbracht. Es kann dabei sein, dass zum Einbringen des Werkstückträgers 4 die Aufnahmeeinheit 7 zunächst in einer abweichenden Position angeordnet ist und die Aufnahmeeinheit 7 erst mit eingebrachtem Werkstückträger 4 mittels der Hubeinheit 10 in die Vorposition PW1 verfahren wird. Dies wird in geeigneter Weise von der Steuereinheit 9 gesteuert. Die Steuereinheit 9 ist zudem ausgebildet, die erste Antriebseinheit 6 und die Hubeinheit 10 mit der zweiten Antriebseinheit derart zu steuern, dass die von dem Spannrahmen 3 aufgenommene Seitenwand 101 und die von der Aufnahmeeinheit 7 über den Werkstückträger 4 aufgenommene Karosserie 102 simultan in eine Verbindungsposition P2 verbracht werden. In der Verbindungsposition P2 wird dann die Seitenwand 101 mit der Karosserie 102 durch Fügen verbunden.

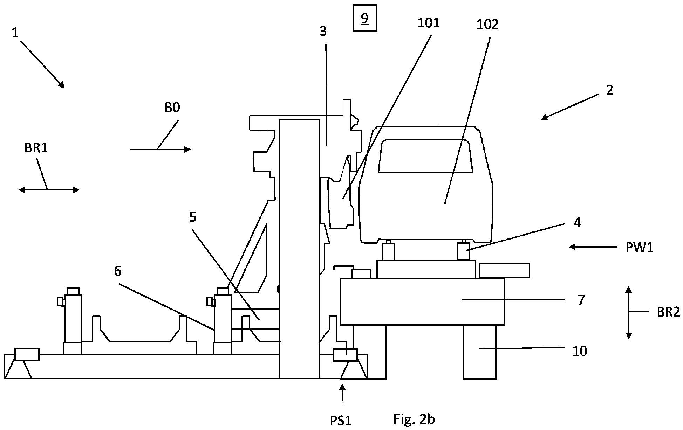

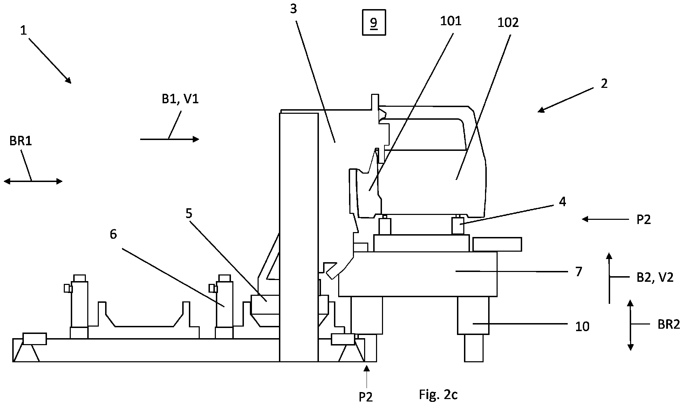

Dazu wird der Spannrahmen 3 mit der Seitenwand 101 zunächst ausgehend von der in Fig. 2a gezeigten Aufnahmeposition PS0 in einer Bewegung B0 in horizontaler Richtung BR1 zu der Geometrie-Spannstation 2 in eine in Fig. 2b gezeigte Vorposition PS1 verfahren, von der ausgehend schließlich das Bewegen des Spannrahmens 3 mit dem für den Spannrahmen 3 vorgegebenen Bewegungsablauf simultan zu dem Bewegen des Werkstückträgers 4 mit dem für den Werkstückträger 4 vorgegebenen Bewegungsablauf startet. Ausgehend von der Vorposition PS1 beziehungsweise der Vorposition PW1 werden dann der Spannrahmen 3 mit der Seitenwand 101 in einer weiteren horizontalen Bewegung B1 und der Werkstückträger 4 mit der Karosserie 102 in einer vertikalen Bewegung B2 jeweils simultan unter einem vorgebbaren Verbindungswinkel VA oder einem vorgebbaren Bewegungsablauf BA in die Verbindungsposition P2 verbracht, wobei der Spannrahmen 3 in der Verbindungsposition P2 an einem Fixierelement 13 der Geometrie-Spannstation 2 fixiert wird. Das Fixierelement 13 umfasst dazu insbesondere mehrere in den Figuren nicht explizit gezeigte Spanner, Anschläge und/oder weitere Fixiermittel zum Fixieren des Spannrahmens 3. In der Verbindungsposition P2 können dann die Seitenwand 101 und die Karosserie 102 miteinander verbunden werden. In Fig. 2c ist die Bearbeitungsstation 1 gezeigt, wobei der Spannrahmen 3 mit der Seitenwand 101 und der Werkstückträger 4 mit der Karosserie 102 die Verbindungsposition P2 erreicht haben.

Insbesondere kann dann in der Verbindungsposition P2 ein Schweißprozess zum Verbinden der Seitenwand 101 mit der Karosserie 102 gestartet werden. Insbesondere kann aber auch vorgesehen sein, dass auf eine Verbindungsfläche der Seitenwand 101, die beim Verbinden mit der Karosserie 102 die Karosserie 102 kontaktiert, vor dem Verbringen in die Verbindungsposition P2 Kleber aufgebracht wird. Beispielhaft ist eine Verbindungsfläche 110 eines als Seitenwand 101 ausgebildeten ersten Bauteils in Fig. 4a und Fig. 4b gezeigt. Der Verbindungswinkel VA zum Verbinden der Seitenwand 101 mit der Karosserie 102 kann dabei so vorgegeben werden, dass der Kleber beim Verbinden nicht durch ein vorzeitiges Aneinanderreiben von Flächen verschmiert. Die Bauelemente 101, 102 werden dann durch das Verspannen von Karosserie 102 und Seitenwand 101 mittels des fixierten Spannrahmen 3 in der Verbindungsposition P2 durch Verkleben verbunden.

Um einen vorgegebenen Verbindungswinkel VA, unter dem die Seitenwand 101 und die Karosserie 102 kontaktiert beziehungsweise zusammengeführt werden sollen, zu erzielen, gibt die Steuereinheit 9 der Bearbeitungsstation für die horizontale Bewegung B1 von der Vorposition PS1 in die Verbindungsposition P2 eine erste Geschwindigkeit V1 vor und für die vertikale Bewegung B2 von der Vorposition PW1 in die Verbindungsposition P2 eine zweite Geschwindigkeit V2 vor, mit der die Bewegungen B1, B2 dann ausgeführt werden.

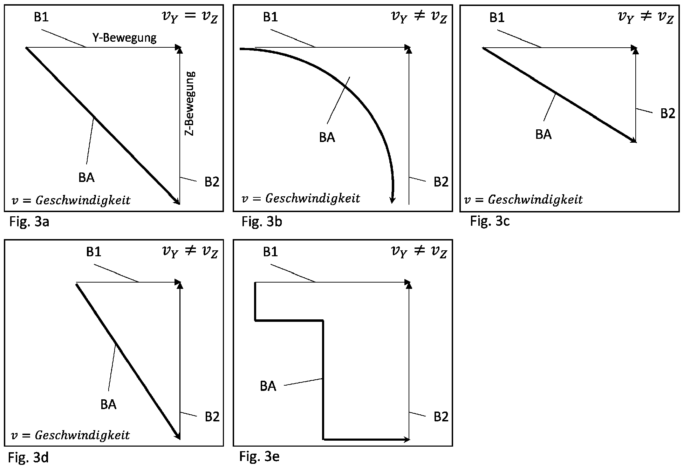

Beispiele für unterschiedliche Vorgaben für die Geschwindigkeit V1 der Bewegung B1 des Spannrahmens 3 und die Geschwindigkeit V2 der Bewegung B2 des Werkstückträgers 4 und daraus resultierende addierte Gesamtbewegungsabläufe BA, die zu unterschiedlichen Verbindungswinkeln führen, sind in Fig. 3a bis Fig. 3e gezeigt. Dabei sind an sich gleich lange Verfahrwege für das Verbringen von der jeweiligen Vorposition PS1, PW1 bis zu der Verbindungsposition P2 angenommen. Die horizontale Bewegung B1 ist dabei in Fig. 3a bis Fig. 3e auch als Y-Bewegung bezeichnet und als horizontaler Vektor dargestellt, die vertikale Bewegung B2 als Z-Bewegung und als vertikaler Vektor dargestellt. Der Gesamtbewegungsablauf BA ist auch als "Resultierende Bewegung" bezeichnet. Für die Geschwindigkeit V1 wird auch v_{Y} und für die Geschwindigkeit V2 v_{Z} verwendet.

In Fig. 3a gilt, dass die Geschwindigkeit V1 der Bewegung B1 gleich der Geschwindigkeit V2 der Bewegung B2 ist. In Fig. 3b bis Fig. 3e ist die Geschwindigkeit V1 jeweils ungleich der Geschwindigkeit V2. In Fig. 3b ist die Geschwindigkeit V1 geringer ist als die Geschwindigkeit V2, wobei die Geschwindigkeiten V1, V2 nicht konstant sind. In Fig. 3c sind die Geschwindigkeiten V1, V2 im Wesentlichen konstant, wobei die Geschwindigkeit V1 kleiner als die Geschwindigkeit V2 ist. In Fig. 3d sind die Geschwindigkeiten V1, V2 im Wesentlichen konstant, wobei die Geschwindigkeit V1 größer als die Geschwindigkeit V2 ist. In Fig. 3e werden die Bewegungen B1, B2 zwischenzeitlich gestoppt.

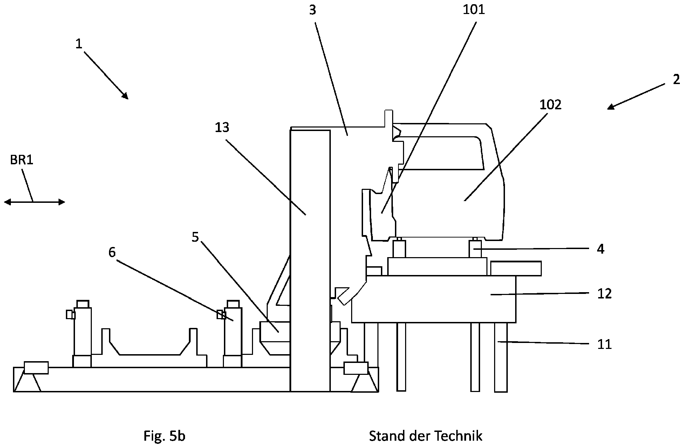

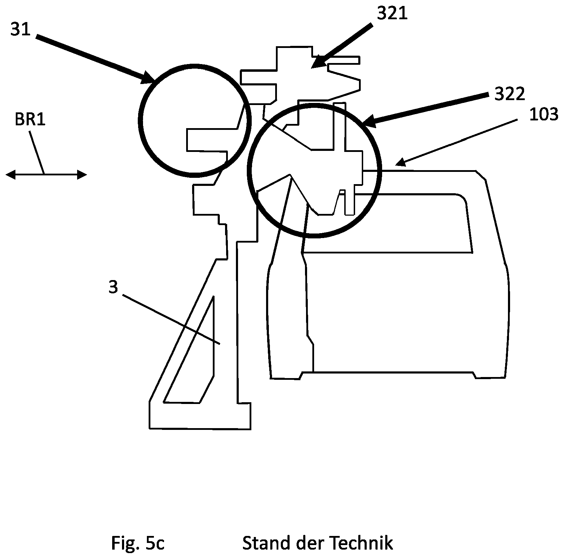

In Fig. 5a ist eine weitere im Stand der Technik bekannte Bearbeitungsstation 1 mit einer Geometrie-Spannstation 2 und einem in Horizontalrichtung BR1 verfahrbaren Spannrahmen 3 mit einer Spanngruppe 32 dargestellt. Eine Seitenwand 101 als erstes Bauteil wird dabei an eine Karosserie 102 als zweites Bauteil geclipst, bevor die Bauelemente 101, 102 in die Geometrie-Spannstation 2 verbracht werden. Dabei fährt die Karosserie mit einem Skid als Werkstückträger 4 über eine Rollenbahn 12 mit einer Aufständerung 11 in die Geometrie-Spannstation 2 ein. Der Spannrahmen 3 wird dann in Horizontalrichtung BR1 an die Geometrie-Spannstation 2 verfahren und dort beidseitig an einem Fixierelement 13 verspannt, wie in Fig. 5b gezeigt. Der Spannrahmen 3 spannt dann die Karosserie 102 und die Seitenwand 101 in einer Verbindungsposition und ein Schweißprozess zum Verbinden der Seitenwand 101 mit der Karosserie 102 startet. Problematisch dabei ist unter anderem, dass der Spannrahmen 3 mit der Spanngruppe 32 zum Verspannen der Bauteile 101, 102 nicht direkt in die Verbindungsposition verfahren werden kann, wie in Fig. 5c gezeigt. So kann die dort exemplarisch gezeigte Spanngruppe 32 zum Spannen einer Dachrahmenbauteileanordnung 103 nicht einfach in horizontaler Richtung (Y-Richtung) verfahren werden, da diese ansonsten mit Teilen der Karosserie kollidieren würde. Um das zu vermeiden, umfasst der Spannrahmen 3 eine Schwenkeinheit 31 mit der die Spanngruppe 32 verschwenkt werden kann. Fig. 5c zeigt zur Illustration die geöffnete Spanngruppe 321, mit der der Spannrahmen 3 bis an die Bauteileanordnung 103 herangefahren wird, und die in die Arbeitsposition eingeschwenkte Spanngruppe 322, in der die Bauteileanordnung 103 verspannt und dann verschweißt werden kann.

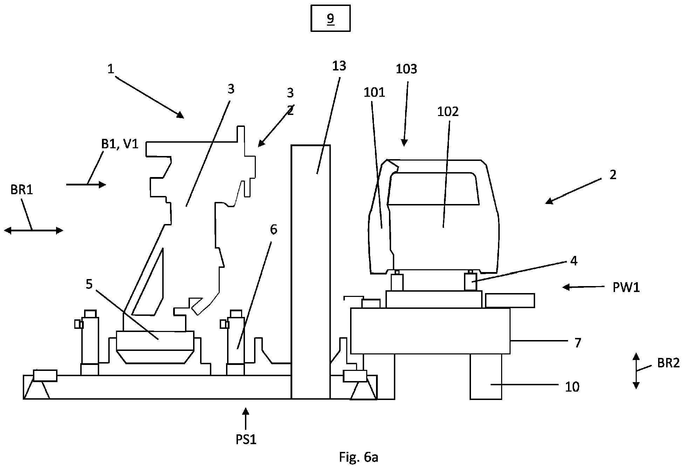

Ein Verfahren und eine Bearbeitungsstation, die geeignet sind, die zuvor beschriebene Bauteileanordnung 103 zu verspannen und zu fügen, ohne eine verschwenkbar ausgebildete Spanngruppe und ohne eine Schwenkeinheit aufzuweisen, wird unter Bezugnahme auf Fig. 6a bis Fig. 6c näher erläutert.

Fig. 6a zeigt dabei ein Ausführungsbeispiel für eine erfindungsgemäß ausgebildete Bearbeitungsstation 1 zum Fügen eines ersten Bauteils 101 mit einem zweiten Bauteil 102, wobei in diesem Ausführungsbeispiel das erste Bauteil 101 eine Seitenwand als Karosseriebauteil ist und das zweite Bauteil 102 eine Karosserie ist. Das zweite Bauteil 102 und das erste Bauteil 101, das an das zweite Bauteil 102 zur provisorischen Anordnung geclipst ist, bilden dabei eine Bauteileanordnung 103, die durch Fügen verbunden werden soll.

Die Bearbeitungsstation 1 umfasst eine Geometrie-Spannstation 2, auch Geobox genannt, und einen Spannrahmen 3 mit einer nicht verschwenkbaren Spanngruppe 32. Der Spannrahmen 3 ist auf einer beweglich ausgebildeten Trageinheit 5 angeordnet. Die Trageinheit 5 und damit auch der Spannrahmen 3 sind mittels einer ersten Antriebseinheit 6, die hier insbesondere einen Elektromotor umfasst, in eine Horizontalrichtung als erste Bewegungsrichtung BR1 verfahrbar. Die Antriebseinheit 6 wird dabei von einer elektronischen Steuereinheit 9 der Bearbeitungsstation 1 gesteuert. In Fig. 6a ist die Bearbeitungsstation 1 gezeigt, bei der sich der Spannrahmen 3 beziehungsweise die Spanngruppe 32 in einer Vorposition PS1 befindet.

Auch wenn in Fig. 6a nur ein Spannrahmen 3 links von der Geometrie-Spannstation 2 dargestellt ist, kann insbesondere zum Anbringen von Seitenwänden an eine Karosserie ein weiterer Spannrahmen rechts der Geometrie-Spannstation 2 vorgesehen sein, wobei der weitere Spannrahmen vorteilhafterweise in gleicher Weise gesteuert wird, wie der Spannrahmen 3, sodass beide Spannrahmen vorteilhafterweise die gleichen Verfahrensschritte ausführen, insbesondere synchron.

Die Geometrie-Spannstation 2 der Bearbeitungsstation 1 umfasst eine Aufnahmeeinheit 7, die in diesem Ausführungsbeispiel als Abschnitt einer Rollenbahn ausgebildet ist. Die Aufnahmeeinheit 7 der Geometrie-Spannstation 2 ist zur Aufnahme eines eine Bauteileanordnung 103 tragenden Werkstückträgers 4 ausgebildet, wobei der Werkstückträger 4 in diesem Ausführungsbeispiel ein Skid ist. Die Karosserie 102 als zweites Bauteil wird dabei in diesem Ausführungsbeispiel auf dem Werkstückträger 4 angeordnet und das erste Bauteil 101, die Seitenwand, an die Karosserie 102 geclipst. Die so gebildete Bauteileanordnung 103 wird dann über ein Rollenbahnsystem in die Geometrie-Spannstation 2 verbracht, wobei der Werkstückträger 4 von der Aufnahmeeinheit 7 aufgenommen wird. Die Aufnahmeeinheit 7 ist dabei auf einer eine zweite Antriebseinheit umfassenden Hubeinheit 10 angeordnet. Mittels dieser der Aufnahmeeinheit 7 zugeordneten Hubeinheit 10 kann die Aufnahmeeinheit 7 in eine Vertikalrichtung als zweite Bewegungsrichtung BR2 bewegt werden. Die zweite Antriebseinheit beziehungsweise die Hubeinheit 10 wird dabei ebenfalls mittels der Steuereinheit 9 der Bearbeitungsstation 1 gesteuert.

In Fig. 6a ist der Werkstückträger 4 mittels der Hubeinheit 10 dabei abgesenkt und in eine Vorposition PW1 verbracht. Es kann dabei sein, dass zum Einbringen des Werkstückträgers 4 die Aufnahmeeinheit 7 zunächst in einer abweichenden Position angeordnet ist und die Aufnahmeeinheit 7 erst mit eingebrachtem Werkstückträger 4 mittels der Hubeinheit 10 in die Vorposition PW1 verfahren wird. Dies wird in geeigneter Weise von der Steuereinheit 9 gesteuert. Die Steuereinheit 9 ist zudem ausgebildet, die erste Antriebseinheit 6 und die Hubeinheit 10 mit der zweiten Antriebseinheit derart zu steuern, dass die von dem der Spannrahmen 3 mit der Spanngruppe 32 und die von der Aufnahmeeinheit 7 über den Werkstückträger 4 aufgenommene Bauteileanordnung simultan in eine Verbindungsposition P2 verbracht werden. In der Verbindungsposition P2 wird dann die Seitenwand 101 mit der Karosserie 102 durch Fügen verbunden.

Dazu wird der Spannrahmen 3 mit der Spanngruppe 32 ausgehend von der in Fig. 6a gezeigten Vorposition PS1 in einer Bewegung B1 in horizontaler Richtung BR1 mit einer Geschwindigkeit V1 zu der Geometrie-Spannstation 2 in die Verbindungsposition P2 verfahren. Die Bewegung B1 erfolgt dabei simultan zu dem Bewegen des Werkstückträgers 4 mit dem für den Werkstückträger 4 vorgegebenen Bewegungsablauf. Ausgehend von der Vorposition PS1 beziehungsweise der Vorposition PW1 werden der Spannrahmen 3 mit der Spanngruppe 32 in einer horizontalen Bewegung B1 und der Werkstückträger 4 mit der Bauteileanordnung 103 in einer vertikalen Bewegung B2 jeweils simultan unter einem vorgebbaren Winkel VA und/oder einem vorgebbaren Bewegungsablauf BA in die Verbindungsposition P2 verbracht. Für den Winkel VA kann dabei insbesondere eine zu dem Boden, auf dem die Bearbeitungsstation 1 steht, parallele Ebene als Bezugsebene vorgesehen werden.

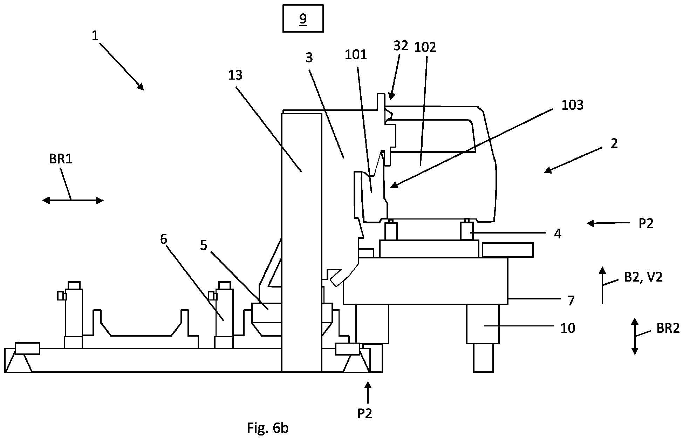

Fig. 6b zeigt den Spannrahmen 3 beziehungsweise die Spanngruppe 32 und den Werkstückträger 4 beziehungsweise die Bauteileanordnung 103 in der Verbindungsposition P2. Der Spannrahmen 3 wird in der Verbindungsposition P2 an einem Fixierelement 13 der Geometrie-Spannstation 2 fixiert. Das Fixierelement 13 umfasst dazu insbesondere mehrere in den Figuren nicht explizit gezeigte Spanner, Anschläge und/oder weitere Fixiermittel zum Fixieren des Spannrahmens 3. Mittels der Spanngruppe 32 wird dann die Bauteileanordnung 103 verspannt. In der Verbindungsposition P2 werden dann die Seitenwand 101 und die Karosserie 102 durch Fügen miteinander verbunden, insbesondere miteinander verschweißt.

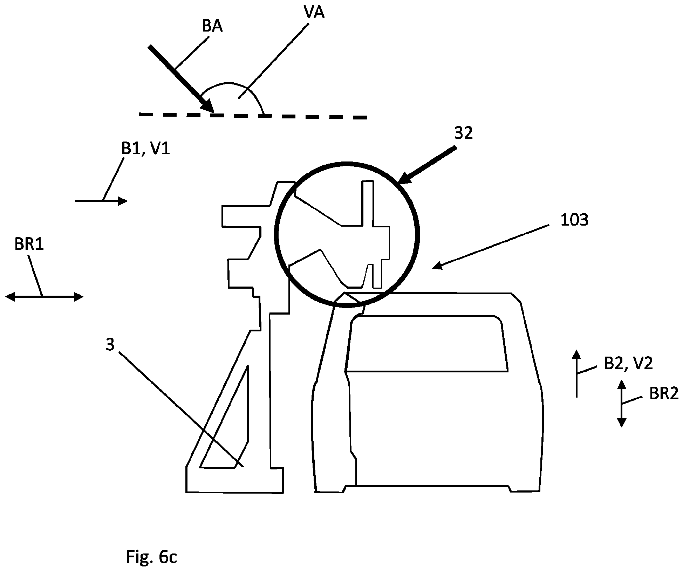

In Fig. 6c ist beispielhaft ein Bewegungsablauf BA, der sich aus der Bewegung B1 des Spannrahmens 3 und einer Bewegung B2 des Werkstückträgers 4 ergibt, und ein daraus resultierender Winkel VA, unter dem die Spanngruppe 32 und die Bauteileanordnung 103 zusammengeführt werden, dargestellt. Der Werkstückträger 4 selbst ist dabei in Fig. 6c nicht dargestellt. Vorteilhafterweise lassen sich hierdurch die Spanngruppe 32 und die Bauteileanordnung 103 zusammenführen, ohne die Spanngruppe 32 verschwenken zu müssen. Durch die Möglichkeit, den Spannrahmen 3 und die auf dem Werkstückträger angeordnete Bauteileanordnung 103 zu bewegen, kann vorteilhafterweise die teure und schwere Schwenkeinheit, wie in Fig. 5c gezeigt, entfallen.

Um einen vorgegebenen Winkel VA, unter dem die Spanngruppe 32 und die Bauteileanordnung 103 zusammengeführt werden sollen, zu erzielen, gibt die Steuereinheit 9 der Bearbeitungsstation 1 für die horizontale Bewegung B1 von der Vorposition PS1 in die Verbindungsposition P2 eine erste Geschwindigkeit V1 vor und für die vertikale Bewegung B2 von der Vorposition PW1 in die Verbindungsposition P2 eine zweite Geschwindigkeit V2 vor, mit der die Bewegungen B1, B2 dann simultan ausgeführt werden.

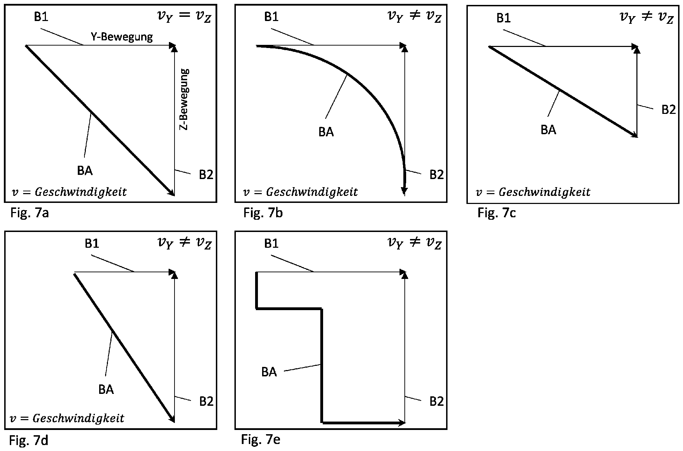

Beispiele für unterschiedliche Vorgaben für die Geschwindigkeit V1 der Bewegung B1 des Spannrahmens 3 und die Geschwindigkeit V2 der Bewegung B2 des Werkstückträgers 4 und daraus resultierende addierte Gesamtbewegungsabläufe BA, die insbesondere zu unterschiedlichen Winkeln VA führen, sind in Fig. 7a bis Fig. 7e gezeigt. Dabei sind an sich gleich lange Verfahrwege für das Verbringen von der jeweiligen Vorposition PS1, PW1 bis zu der Verbindungsposition P2 angenommen. Die horizontale Bewegung B1 ist dabei in Fig. 7a bis Fig. 7e auch als Y-Bewegung bezeichnet und als horizontaler Vektor dargestellt, die vertikale Bewegung B2 als Z-Bewegung und als vertikaler Vektor dargestellt. Der Gesamtbewegungsablauf BA ist auch als "Resultierende Bewegung" bezeichnet. Für die Geschwindigkeit V1 wird auch v_{Y} und für die Geschwindigkeit V2 v_{Z} verwendet.

In Fig. 7a gilt, dass die Geschwindigkeit V1 der Bewegung B1 gleich der Geschwindigkeit V2 der Bewegung B2 ist. In Fig. 7b bis Fig. 7e ist die Geschwindigkeit V1 jeweils ungleich der Geschwindigkeit V2. In Fig. 7b ist die Geschwindigkeit V1 geringer ist als die Geschwindigkeit V2, wobei die Geschwindigkeiten V1, V2 nicht konstant sind. In Fig. 7c sind die Geschwindigkeiten V1, V2 im Wesentlichen konstant, wobei die Geschwindigkeit V1 kleiner als die Geschwindigkeit V2 ist. In Fig. 7d sind die Geschwindigkeiten V1, V2 im Wesentlichen konstant, wobei die Geschwindigkeit V1 größer als die Geschwindigkeit V2 ist. In Fig. 7e werden die Bewegungen B1, B2 zwischenzeitlich gestoppt.

Die in den Figuren dargestellten und im Zusammenhang mit diesen erläuterten Ausführungsbeispiele dienen der Erläuterung der Erfindung und sind für diese nicht beschränkend.

### Bezugszeichenliste

- 1: Bearbeitungsstation
- 2: Geometrie-Spannstation
- 3: Spannrahmen
- 31: Schwenkeinheit
- 32: Spanngruppe
- 321: Spanngruppe geöffnet
- 322: Spanngruppe eingeschwenkt
- 4: Werkstückträger
- 5: Trageinheit
- 6: erste Antriebseinheit
- 7: Aufnahmeeinheit
- 9: Steuereinheit
- 10: Hubeinheit
- 11: Aufständerung
- 12: Rollenbahn
- 13: Fixierelement
- 101: erstes Bauteil
- 102: zweites Bauteil
- 103: Bauteileanordnung
- 110: Verbindungsfläche des ersten Bauteils (101)
- 111: Hinterschnitt des ersten Bauteils (101)
- B0: Bewegung in Vorposition
- B1: erste Bewegung
- B2: zweite Bewegung
- BA: resultierender Gesamtbewegungsablauf
- BR1: erste Bewegungsrichtung
- BR2: zweite Bewegungsrichtung
- PS0: Aufnahmeposition des Spannrahmens (3)
- PS1: Vorposition des Spannrahmens (3)
- P2: Verbindungsposition
- PW1: Vorposition des Werkstückträgers (4)
- V1: erste Geschwindigkeit
- V2: zweite Geschwindigkeit
- VA: Verbindungswinkel

## Patentansprüche

1. Verfahren zum Verbinden, insbesondere zum Fügen, eines ersten Bauteils (101) mit einem zweiten Bauteil (102) in einer Bearbeitungsstation (1), wobei ein Werkstückträger (4) in eine Geometrie-Spannstation (2) der Bearbeitungsstation (1) verbracht wird, **dadurch gekennzeichnet, dass** ein Spannrahmen (3) der Bearbeitungsstation (1) in einer ersten Bewegung (B1) und der in die Geometrie-Spannstation (2) verbrachte Werkstückträger (4) in einer zweiten Bewegung (B2) jeweils aus einer Vorposition (PS1, PW1) simultan in eine Verbindungsposition (P2) verbracht werden, in der das erste Bauteil (101) mit dem zweiten Bauteil (102) verbunden wird, wobei eine erste Bewegungsrichtung (BR1) der ersten Bewegung (B1) und eine zweite Bewegungsrichtung (BR2) der zweiten Bewegung (BR) nichtparallel sind.

2. Verfahren nach Anspruch 1, **dadurch gekennzeichnet, dass** der Spannrahmen (3) in einer Horizontalbewegung als erster Bewegung (B1) von seiner Vorposition (PS1) in die Verbindungsposition (P2) verbracht wird.

3. Verfahren nach Anspruch 1 oder Anspruch 2, **dadurch gekennzeichnet, dass** der Werkstückträger (4) in einer Vertikalbewegung als zweiter Bewegung (B2) von seiner Vorposition (PW1) in die Verbindungsposition (P2) verbracht wird.

4. Verfahren nach einem der vorstehenden Ansprüche, **dadurch gekennzeichnet, dass** die erste Bewegung (B1) mit einer ersten Geschwindigkeit (V1) ausgeführt wird und die zweite Bewegung (B2) mit einer zweiten Geschwindigkeit (V2) ausgeführt wird.

5. Verfahren nach Anspruch 4, **dadurch gekennzeichnet, dass** ein Winkel (VA) vorgegeben wird, unter dem der Spannrahmen (3) und der Werkstückträger (4) die Verbindungsposition (P2) erreichen sollen, wobei bei einer vorgegebenen ersten Bewegungsrichtung (BR1) und einer vorgegebenen zweiten Bewegungsrichtung (BR2) die erste Geschwindigkeit (V1) und die zweite Geschwindigkeit (V2) so bestimmt werden, dass der Spannrahmen (3) und der Werkstückträger (4) die Verbindungsposition (P2) unter dem vorgegebenen Winkel (VA) erreichen.

6. Verfahren nach Anspruch 4 oder Anspruch 5, **dadurch gekennzeichnet, dass** ein Bewegungsablauf (BA) vorgegeben wird, gemäß dem der Spannrahmen (3) und der Werkstückträger (4) die Verbindungsposition (P2) erreichen sollen, wobei bei einer vorgegebenen ersten Bewegungsrichtung (BR1) und einer vorgegebenen zweiten Bewegungsrichtung (BR2) die erste Geschwindigkeit (V1) und die zweite Geschwindigkeit (V2) so bestimmt werden, dass der Spannrahmen (3) und der Werkstückträger (4) gemäß dem vorgegebenen Bewegungsablauf (BA) die Verbindungsposition (P2) erreichen.

7. Verfahren nach einem der vorstehenden Ansprüche, **dadurch gekennzeichnet, dass** vor der Ausführung der ersten Bewegung (B1) und der zweiten Bewegung (B2) das erste Bauteil (101) in den Spannrahmen (3) der Bearbeitungsstation (1) verbracht, das erste Bauteil (101) in dem Spannrahmen (3) fixiert und das zweite Bauteil (102) auf dem Werkstückträger (4) in die Geometrie-Spannstation (2) verbracht wird.

8. Verfahren nach Anspruch 7, **dadurch gekennzeichnet, dass** auf eine Verbindungsfläche (110) des ersten Bauteils (101), die beim Verbinden des ersten Bauteils (101) mit dem zweiten Bauteil (102) das zweite Bauteil (102) kontaktiert, vor dem Verbringen in die Verbindungsposition (P2) Kleber aufgebracht wird; und/oder dass auf eine Verbindungsfläche des zweiten Bauteils (102), die beim Verbinden des ersten Bauteils (101) mit dem zweiten Bauteil (102) das erste Bauteil kontaktiert, vor dem Verbringen in die Verbindungsposition (P2) Kleber aufgebracht wird.

9. Verfahren nach einem der Ansprüche 1 bis 6, **dadurch gekennzeichnet, dass** das zweite Bauteil (102) und das erste Bauteil (101), das an dem zweiten Bauteil (102) provisorisch angeordnet ist, eine Bauteileanordnung (103) bilden, die vor der Ausführung der ersten Bewegung (B1) und der zweiten Bewegung (B2) auf dem Werkstückträger (4) in die Geometrie-Spannstation (2) der Bearbeitungsstation (1) verbracht wird, wobei der eine Spanngruppe (32) aufweisende Spannrahmen (3) der Bearbeitungsstation (1) in der ersten Bewegung (B1) und der Werkstückträger (4) mit der Bauteileanordnung (103) in der zweiten Bewegung (B2) jeweils aus der Vorposition (PS1, PW1) in die Verbindungsposition (P2) verbracht werden, wobei der Spannrahmen (3) in der Verbindungsposition (P2) mit einem Fixierelement (13) der Geometriespannstation (2) fixiert wird, und dann das erste Bauteil (101) mit dem zweiten Bauteil (102) in der Verbindungsposition (P2) gefügt wird.

10. Bearbeitungsstation (1) zum Verbinden, insbesondere zum Fügen, eines ersten Bauteils (101) einer Fahrzeugkarosserie mit einem zweiten Bauteil (102) einer Fahrzeugkarosserie umfassend eine Geometrie-Spannstation (2) und einen Spannrahmen (3),
wobei der Spannrahmen (3) auf einer beweglich ausgebildeten Trageinheit (5) angeordnet ist, die mittels einer ersten Antriebseinheit (6) in eine erste Bewegungsrichtung (BR1) bewegt werden kann, und
wobei die Geometrie-Spannstation (2) eine Aufnahmeeinheit (7) aufweist, die zur Aufnahme eines Werkstückträgers (4) ausgebildet ist,
**dadurch gekennzeichnet, dass**
der Aufnahmeeinheit (7) eine zweite Antriebseinheit (10) zugeordnet ist, mit der die Aufnahmeeinheit (7) in eine zweite Bewegungsrichtung (BR2) bewegt werden kann, wobei die erste Bewegungsrichtung (BR1) und die zweite Bewegungsrichtung (BR2) nichtparallel sind, und
der Bearbeitungsstation (1) eine Steuereinheit (9) zugeordnet ist, die ausgebildet ist, die erste Antriebseinheit (6) und die zweite Antriebseinheit (10) derart zu steuern, dass der Spannrahmen (3) und der Werkstückträger (4) in eine Verbindungsposition (P2) verbracht werden.

11. Bearbeitungsstation (1) nach Anspruch 10, **dadurch gekennzeichnet, dass** die Trageinheit (5) ausgebildet ist, mittels der ersten Antriebseinheit (6) in einer Horizontalrichtung als erster Bewegungsrichtung (BR1) bewegt zu werden.

12. Bearbeitungsstation (1) nach Anspruch 10 oder Anspruch 11, **dadurch gekennzeichnet, dass** die Aufnahmeeinheit (7) ausgebildet ist, mittels der zweiten Antriebseinheit (10) in Vertikalrichtung als zweiter Bewegungsrichtung (BR2) bewegt zu werden, insbesondere mittels einer Hubeinheit (10).

13. Bearbeitungsstation (1) nach einem der Ansprüche 10 bis 12, **dadurch gekennzeichnet, dass** der Spannrahmen (3) der Bearbeitungsstation (1) zur Aufnahme des ersten Bauteils (101) ausgebildet ist, und die Geometrie-Spannstation (2) weiter zur Aufnahme des Werkstückträgers (4), der das zweite Bauteil (102) trägt, ausgebildet ist, wobei die Steuereinheit (9) weiter ausgebildet ist, die erste Antriebseinheit (6) und die zweite Antriebseinheit (10) derart zu steuern, dass ein von dem Spannrahmen (3) aufgenommenes erstes Bauteil (101) und ein von der Aufnahmeeinheit (7) über einen Werkstückträger (4) aufgenommenes zweites Bauteil (102) simultan in die Verbindungsposition (P2), in der das erste Bauteil (101) mit dem zweiten Bauteil (102) verbunden werden kann, verbracht werden.

14. Bearbeitungsstation (1) nach einem der Ansprüche 10 bis 12, **dadurch gekennzeichnet, dass** das zweite Bauteil (102) und das erste Bauteil (101), das an dem zweiten Bauteil (102) provisorisch angeordnet ist, eine Bauteileanordnung (103) bilden, der Spannrahmen (3) eine Spanngruppe (32) umfasst, die Bearbeitungsstation (1) des Weiteren ein Fixierelement (13) zum Fixieren des Spannrahmens (3) in der Verbindungsposition (P2) umfasst, und die Geometrie-Spannstation (2) eine Aufnahmeeinheit (7) umfasst, die zur Aufnahme des Werkstückträgers (4), der die Bauteileanordnung (103) trägt, ausgebildet ist, wobei die Steuereinheit (9) weiter ausgebildet ist, die erste Antriebseinheit (6) und die zweite Antriebseinheit (10) derart zu steuern, dass die Spanngruppe (32) des Spannrahmens (3) und eine von der Aufnahmeeinheit (7) über einen Werkstückträger (4) aufgenommene Bauteileanordnung (103) in die Verbindungsposition (P2), in der das erste Bauteil (101) mit dem zweiten Bauteil (102) gefügt werden kann, verbracht werden.

15. Bearbeitungsstation (1) nach einem der Ansprüche 10 bis 14, **dadurch gekennzeichnet, dass** die Bearbeitungsstation (1) zur Ausführung eines Verfahrens nach einem der Ansprüche 1 bis 9 ausgebildet ist.
